# EUROPEAN PATENT SPECIFICATION

(11) **EP 1 973 270 B1**
(45) Date of publication and mention of the grant of the patent: **03.01.2018**
(21) Application number: 07104714.6
(22) Date of filing: 22.03.2007
(51) Int. Cl.: H04L 12/24, G06Q 30/00

(54) **Broadband service delivery**
Breitbanddienstleistung
Livraison de services à bande passante

(43) Date of publication of application: 24.09.2008
(73) Proprietor: PacketFront Software Solutions AB, 101 30 Stockholm (SE)
(72) Inventor: Edenhill, Magnus, 76296 Rånäs (SE)
(74) Representative: Awapatent AB

(56) References cited:
- WO-A-00/60864
- WO-A-02/35797
- US-A1- 2005 049 886
- REUVEN COHEN ET AL: "Video-on-Demand Session Management" IEEE JOURNAL ON SELECTED AREAS IN COMMUNICATIONS, IEEE SERVICE CENTER, PISCATAWAY, US, vol. 14, no. 6, August 1996 (1996-08), XP011054515 ISSN: 0733-8716
- ANNE BODZINGA ET AL: "Interworking IPTV Services with IMS" TELECOMMUNICATIONS NETWORK STRATEGY AND PLANNING SYMPOSIUM, 2006. NETWORKS 2006. 12TH INTERNATIONAL, IEEE, PI, November 2006 (2006-11), pages 1-5, XP031014820 ISBN: 1-4244-0952-7

## Description

### Technical Field

This invention relates to a method of delivering a service over a broadband network between a service provider and a customer. In particular, the invention relates to such methods where multiple service providers have access to customers over a network that is separately managed and operated.

### Background Art

In many prior art broadband networks, the network operator and the service provider to the customer are one and the same. While the network operator/service provider may source services from other service providers, the customer has just one contact point. However, in many cases, it is now common that customers may obtain services from service providers that are different from the network operator. In an open network environment, the objective is to allow the customer to contact one of a number of service providers to obtain a given service which is then provided via the network operated by the network operator.

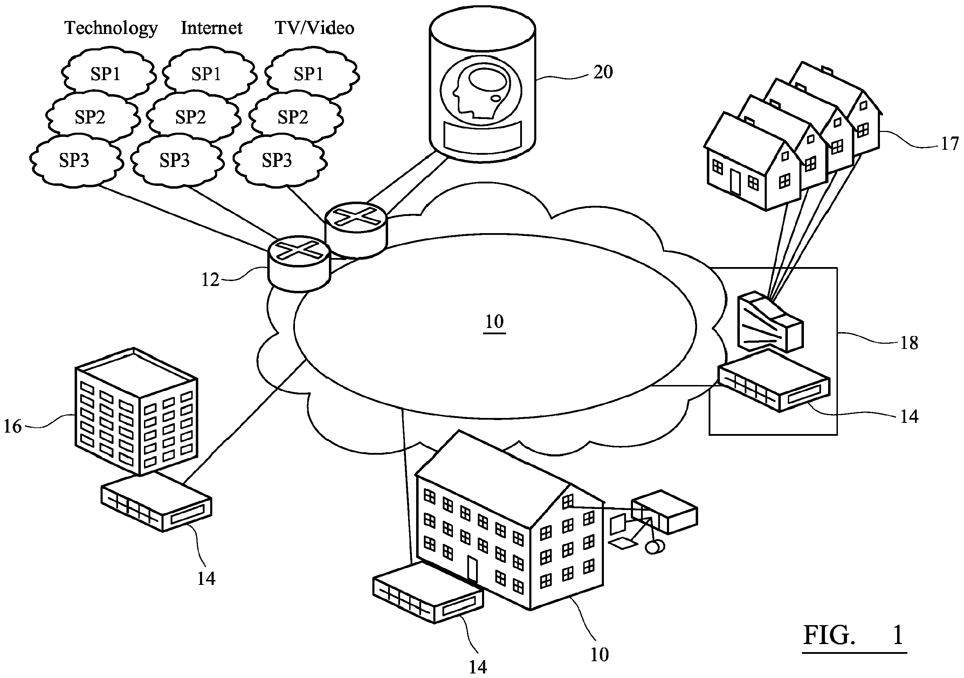

Figure 1 shows a generic description of a broadband network for providing telephone, internet and TV/video services to subscribers in a number of locations. A series of service providers provide the various services (SP1, SP2, SP3) to the network 10 via conventional access points 12. The network 10 provides connects these to subscribers via routers 14 located close to the subscribers. These can include business locations that can include routers in commercial property 16, and domestic subscribers with routers located in a central office 18 for a neighbourhood of separate dwellings (houses 17), or in a single building 19 such as an apartment building.

Operation of the network is controlled by a control and provisioning system 20 that configures the various elements of the network to operate in the desired manner.

The nature of the network service provided to users means that when a customer requests a particular service from a service provider, it is necessary for the service provider to check that the correct network connection is available for the delivery of that service to take place. For example, it is likely that only one TV/Video service will be allowed per customer. Therefore, before initiating a TV/Video service, it is necessary for the service provider to know whether or not there is already a TV/Video service provided to that user. In the past, this has been achieved by providing full details of all services provided to the requesting customer to the service provider who can then determine whether or not the requested service can be provided. Where the service provider and network operator are the same, this is not a particular problem. However, where there is the possibility of several competing service providers being able to provide services to a customer, it is undesirable to allow any one service provider to see all of the information for a given customer since this may include confidential information between the customer and an existing service provider (e.g. the identity of existing service providers, or the level of service currently provided). US 2005/049886 discloses a content broker hosting service that includes a broker module configured to facilitate the management of digital management of digital content of an Internet user.

The problem addressed by the invention is therefore to enable only the information about a customer essential to the provision of a new service to be provided to a service provider when a new service is requested. The invention achieves this objective by means of a service manager application forming part of a network provisioning and control system to extract the appropriate data.

### Disclosure of the invention

This invention provides a method of delivering a service from a service provider to a customer in a network system comprising a plurality of service providers and a network control and provisioning system through which connection of the customer and service provider is controlled, the method comprising:
connecting the service provider to the control and provisioning system via a service manager application which contains predetermined values of conditional data parameters for services to be provided to the customer; on receipt of a request from a service provide to provide a service to the customer, interrogating the customer's connection to the network by means of the service manager to determine the current values of the conditional data parameters and comparing the current values with the predetermined values to determine whether or not conditions for provision of the requested service are met; and
   - communicating the result of the comparison to the service provider to either confirm the requested service or to indicate which of the conditional data parameters does not meet the conditions.

The conditional data parameters preferably include the presence or absence of another service or collection of services, the bandwidth of the connection, the size of any unassigned bandwidth, the total number of services, and/or the presence or absence of customer equipment.

It is particularly preferred that only the values and identities of the conditional parameters not meeting the conditions is communicated to the service provider, and that no data relating to any other service providers is communicated from the service manager to the service provider.

By using the service manager to communicate the information to the service provider, the confidentiality of services provided to the customer by other service providers can be maintained.

### Brief description of the drawings

Figure 1 shows a generic broadband network;
Figure 2 shows a functional diagram of a network; and
Figure 3 shows the basic components of a control and provisioning system.

### Mode(s) for carrying out the invention

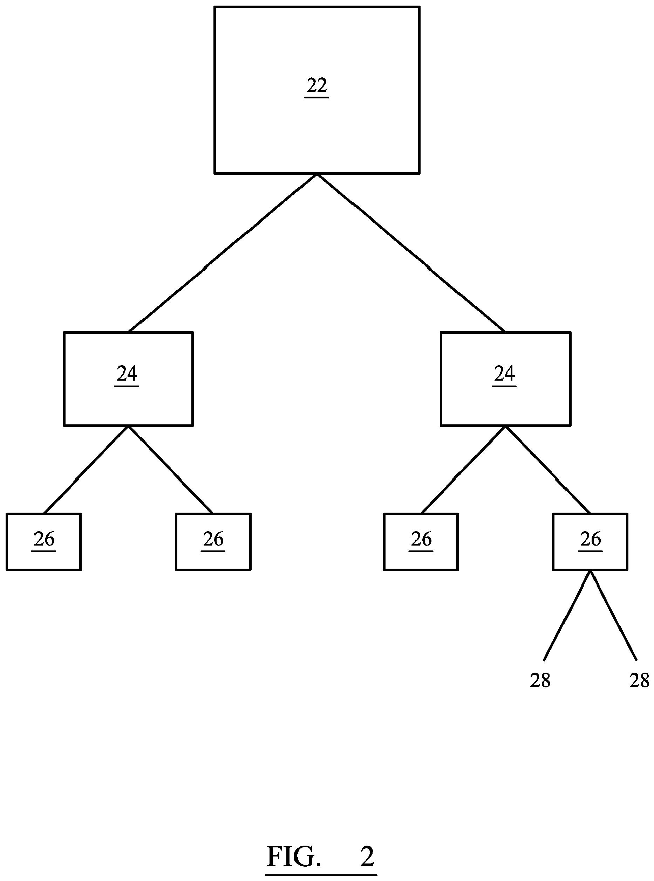

The present invention is implemented in the control and provisioning system 20. For the function of the control and provisioning system 20, the network can be considered in an abstract way as comprising a core 22 having one or more cells 24, each cell having one or more network elements 26 as is shown in Figure 2. Subscribers 28 connect to the network elements 26. This structure is not to be confused with the physical elements making up the network. The functional blocks 22, 24, 26 may be wholly or partly resident in the same or different physical elements, depending on exact size and makeup of the network in question,
although typically, each network element 26 will comprise a router.

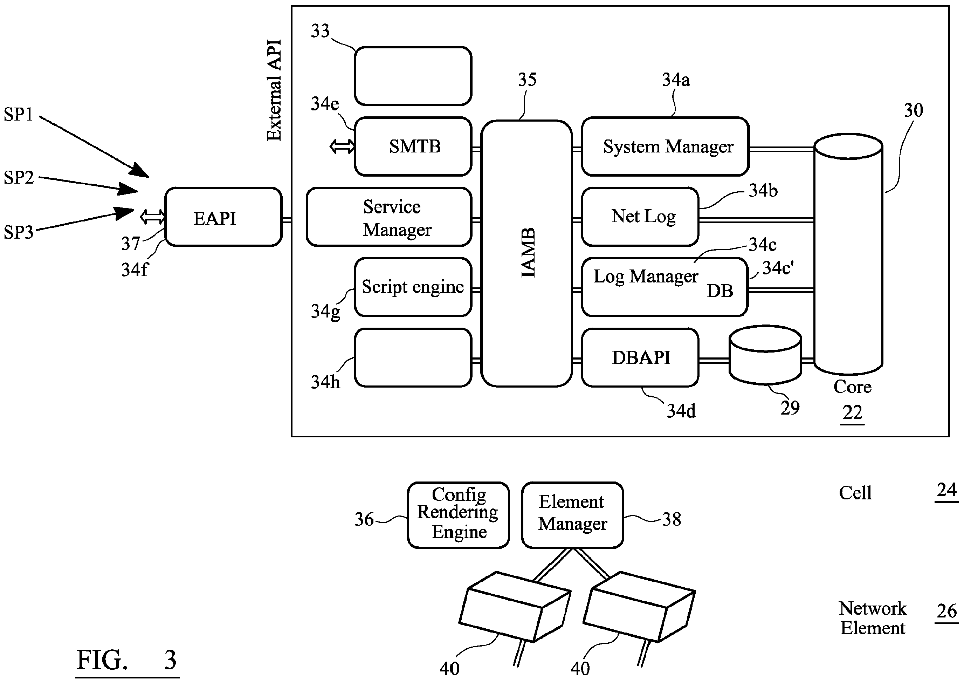

Figure 3 shows a system suitable for implementing the invention. This system is described in more detail in European patent application 05077477.7. The core 22 comprises a file system 30, a database 32, a core module element manager 33, and a set of modules 34a-h that provide the core services for the network. The file system 30, database 32 and modules 33, 34 are all located on a central server, although it is possible that the various components could be distributed over more than one server. The core modules 34 interact with each other, the cells 24 and network elements 26. The core 22 also interacts with external applications such as service provider systems via an external API 37. The core modules 34 comprise a system manager module 34a, a net log module 34b, a log manager module 34c, a database application interface 34d, a subscriber management tool bridge 34e, an external application interface 34f, a script engine 34g, and a configuration job manager 34h. The various core modules 34 communicate with each other via an inter-application message bus 35. Each cell 24 comprises modules that handle that part of the network topology in that cell. The cell 24 can be located on the same server as the core 22, but in the case of a large network, the cell 24 may be separated from the core server and deployed in the network. Each cell includes a configuration rendering engine module 36 and an element manager module 38. Each network element 26 typically comprises a programmable router 40. The subscribers 28 connect equipment such as pcs, TVs and phones to an assigned port on the router 40.

The invention resides in a service manager application 42 which sits between the external application interface 34f, via which the service providers SP1, SP2, SP3 interact with the control and provisioning system 20, and the remainder of the system, including the subscribers 28.

In use, a customer will contact the service provider to request a particular service. This contact can be direct via phone, email or the like. On receipt of the request, the service provider sends a request to the control and provisioning system 20 via the external application interface 34f to provide the requested service to the port in question. The service manager application 42 includes a database of the necessary conditions for any predetermined service to be provided to a port. These conditions can include various parameters, including:
- Denial of service if an identical service is already provided to that customer from another service provider (e.g. there is already a TV service provided so no further TV service can be allowed until the first service is cancelled).
- Bandwidth of service provided (e.g. minimum total bandwidth requirement of >10 Mbits, minimum unassigned bandwidth of >2 Mbits, etc.).
- Permission only if another service is already provided to that user (e.g. a video on demand service may only be provided if a TV service already exists).
- Maximum number of services provided to a given user.
- Service only allowed as part of a bundle (e.g. email may only be provided with general Internet access).

These parameters can be stored in a lookup table. The service manager application 42 interrogates the system using the existing communication resource in the control and provisioning system 20 to determine the current values of the various parameters determined for that service. The interrogation can be at the level of the customer's equipment, the router 40 or any point in the network service relating to that customer. By comparing the current values of the parameters with the required value stored in the database, the service manager application 42 can determine whether or not the service can be provided. In the event that the necessary parameters are present for the requested service, the service manager application 42 confirms to the requesting service provider and enables the control and provisioning system 20 to initiate the new service to the customer.

In the event that one or more of the necessary conditions is not met, the service manager application returns a message to the service provider indicating which required condition is not met and why. For example, if an identical service is already provided, this is communicated to the service provider but not the identity of the existing service provider. Thus the confidential relationship between the existing service provider and the customer is not breached. The customer is then advised of the problem and can take any action necessary to bring everything into line (e.g. upgrade bandwidth, remove existing service, etc.).

If the requested service is one for which there is no entry in the database, the service manager application 42 initiates a communication to the service provider to contact the network operator and establish the values for the necessary conditions to provide that service. These can then be stored in the database and used for the next request of the service. The same approach can be taken where the conditions for a service change, for example decoupling of previously linked services.

Various changes can be made while staying within the scope of the invention. For example, the values and nature of the predetermined parameters can be selected according to the requirements of the network system.

## Claims

1. A method of delivering a service from a service provider to a customer (28) in a network system (10) comprising a plurality of service providers (SP1, SP2, SP3) and a network control and provisioning system (20) through which connection of the customer (28) and service provider (SP1, SP2, SP3) is controlled, the method being performed in a service manager application (42) forming part of the network provisioning and control system, said method comprising:
- connecting the service provider (SP1, SP2, SP3) to the control and provisioning system (20);
- **characterized in that**:
- the service manager application (42) contains predetermined values of conditional data parameters for services to be provided to the customer (28)
- on receipt of a request from a service provider (SP1, SP2, SP3) to provide a service to the customer (28), interrogating the customer's connection to the network system (10) to determine the current values of the conditional data parameters and comparing the current values with the predetermined values to determine whether or not conditions for provision of the requested service are met; and
communicating the result of the comparison to the service provider (SP1, SP2, SP3) to either confirm the requested service or to indicate which of the conditional data parameters does not meet the conditions.

2. A method as claimed in claim 1, wherein the network system (10) connects to the customer (28) by means of an assigned port, the conditional data parameters comprising parameters associated with the assigned port, and in that the service manager application (42), on determining that the conditions for the provision of the requested service are met, enables the control and provisioning system (20) to provide the requested service to the assigned port.

3. A method as claimed in claim 1 or 2, wherein the conditional data parameters include the presence or absence of another service or collection of services, the bandwidth of the connection, the size of any unassigned bandwidth, the total number of services, and/or the presence or absence of customer equipment.

4. A method as claimed in any of the previous claims, wherein only the values and identities of the conditional data parameters not meeting the conditions is communicated to the service provider (SP1, SP2, SP3).

5. A method as claimed in any of the previous claims, wherein no data relating to any other service providers are communicated from the service manager application (42) to the service provider (SP1, SP2, SP3).

6. A method as claimed in any of the previous claims, wherein the service manager application (42) comprises a database of the necessary conditions for any requested service to be provided,
wherein if the requested service is a service for which there is no entry in the database, the service manager application (42) initiating a communication to the service provider to contact a network operator and establish values for the necessary conditions to provide that service, wherein the established values are stored in the database to be able to be used for a next request of the service.

7. A network control and provisioning system (20) for delivery of a service from a service provider to a customer (28) in a network system (10) comprising a plurality of service provider (SP1, SP2, SP3), the network control and provisioning system comprising a service manager application (42) configured to
- connect the service provider to the network control and provisioning system (20), the service manager application (42) containing predetermined values of conditional data parameters for services to be provided to the customer (28),
- interrogate on receipt of a request from the service provider the customer's connection to the network system (10) to determine the current values of the conditional data parameters and compare the current values with the predetermined values to determine whether or not conditions for provision of the requested service are met; and
- communicate the result of the comparison to the service provider (SP1, SP2, SP3) to either confirm the requested service or to indicate which of the conditional data parameters does not meet the conditions

8. A system as claimed in claim 7, wherein the network system (10) is configured to connect to the customer (28) by means of an assigned port, the conditional data parameters comprising parameters associated with the assigned port, and in that the service manager application (42) is configured, on determining that the conditions for the provision of the requested service are met, to enable the control and provisioning system (20) to provide the requested service to the assigned port.

9. A system as claimed in claim 7 or 8, wherein the conditional data parameters include the presence or absence of another service or collection of services, the bandwidth of the connection, the size of any unassigned bandwidth, the total number of services, and/or the presence or absence of customer equipment.

10. A system as claimed in any of claims 7-9, wherein only the values and identities of the conditional data parameters not meeting the conditions is communicated to the service provider (SP1, SP2, SP3).

11. A system as claimed in any of claims 7-10, wherein no data relating to any other service providers are communicated from the service manager application (42) to the service provider (SP1, SP2, SP3).

12. A system as claimed in any of claims 7-11, wherein the service manager application (42) comprises a database of the necessary conditions for any requested service to be provided,
wherein if the requested service is a service for which there is no entry in the database, the service manager application (42) is configured to initiate a communication to the service provider to contact a network operator and establish values for the necessary conditions to provide that service, wherein the established values are stored in the database to be able to be used for a next request of the service.

## Patentansprüche

1. Verfahren zum Liefern eines Dienstes von einem Dienstleister zu einem Kunden (28) in einem Netzwerksystem (10), umfassend mehrere Dienstleister (SP1, SP2, SP3) und ein Netzwerksteuerungs- und -bereitstellungssystem (20), durch das die Verbindung des Kunden (28) und des Dienstleisters (SP1, SP2, SP3) gesteuert wird, wobei das Verfahren in einer Servicemanageranwendung (42) ausgeführt wird, die einen Teil des Netzwerkbereitstellungs- und -steuerungssystems bildet, und das Verfahren umfasst:
- Verbinden des Dienstleisters (SP1, SP2, SP3) mit dem Steuerungs- und -bereitstellungssystem (20);
- **dadurch gekennzeichnet, dass**:
- die Servicemanageranwendung (42) voreingestellte Werte von bedingten Datenparametern für Dienste, die an den Kunden (28) bereitzustellen sind, enthält,
- nach dem Empfang einer Anforderung von einem Dienstleister (SP1, SP2, SP3), um einen Dienst an den Kunden (28) bereitzustellen, Abfragen der Verbindung des Kunden zum Netzwerksystem (10), um die gegenwärtigen Werte der bedingten Datenparameter zu bestimmen, und Vergleichen der gegenwärtigen Werte mit den voreingestellten Werten, um zu bestimmen, ob Bedingungen für das Bereitstellen des angeforderten Dienstes erfüllt sind; und
Kommunizieren des Resultats des Vergleichs zum Dienstleister (SP1, SP2, SP3), um entweder den angeforderten Dienst zu bestätigen oder anzuzeigen, welcher von den bedingten Datenparametern die Anforderungen nicht erfüllt.

2. Verfahren nach Anspruch 1, wobei das Netzwerksystem (10) mit dem Kunden (28) mittels eines zugewiesenen Ports verbindet, die bedingten Datenparameter Parameter umfassen, die mit dem zugewiesenen Port verbunden sind, und die Servicemanageranwendung (42) nach dem Bestimmen, dass die Bedingungen zum Bereitstellen des angeforderten Dienstes erfüllt sind, dem Steuerungs- und Bereitstellungssystem (20) ermöglicht, den angeforderten Dienst an den zugewiesenen Port bereitzustellen.

3. Verfahren nach Anspruch 1 oder 2, wobei die bedingten Datenparameter das Vorhandensein oder Nichtvorhandensein eines anderen Dienstes oder einer anderen Sammlung von Diensten, die Bandbreite der Verbindung, die Größe jeder nicht zugeordneten Bandbreite, die Gesamtzahl von Diensten und/oder das Vorhandensein oder Nichtvorhandensein der Teilnehmereinrichtung umfassen.

4. Verfahren nach einem der vorstehenden Ansprüche, wobei nur die Werte und Identitäten der bedingten Datenparameter, welche die Anforderungen nicht erfüllen, zum Dienstleister (SP1, SP2, SP3) kommuniziert werden.

5. Verfahren nach einem der vorstehenden Ansprüche, wobei keine Daten in Zusammenhang mit irgendwelchen anderen Dienstleistern von der Servicemanageranwendung (42) zum Dienstleister (SP1, SP2, SP3) kommuniziert werden.

6. Verfahren nach einem der vorstehenden Ansprüche, wobei die Servicemanageranwendung (42) eine Datenbank der notwendigen Bedingungen für jeden angeforderten Dienst, der bereitzustellen ist, umfasst,
wobei, wenn der angeforderte Dienst ein Dienst ist, für den es keinen Eintrag in der Datenbank gibt, die Servicemanageranwendung (42) konfiguriert ist, eine Kommunikation zum Dienstleister zu initiieren, um einen Netzbetreiber zu kontaktieren und Werte für die notwendigen Bedingungen zu ermitteln, um diesen Dienst bereitzustellen, wobei die ermittelten Werte in der Datenbank gespeichert werden, sodass sie für eine nächste Anforderung des Dienstes verwendet werden können.

7. Netzwerksteuerungs- und -bereitstellungssystem (20) zum Liefern eines Dienstes von einem Dienstleister zu einem Kunden (28) in einem Netzwerksystem (10), das mehrere Dienstleister (SP1, SP2, SP3) umfasst, wobei das Netzwerksteuerungs- und -bereitstellungssystem eine Servicemanageranwendung (42) umfasst, die konfiguriert ist
- den Dienstleister mit dem Netzwerksteuerungs- und - bereitstellungssystem (20) zu verbinden, wobei die Servicemanageranwendung (42) voreingestellte Werte von bedingten Datenparametern für Dienste, die an den Kunden (28) bereitzustellen sind, enthält,
- nach dem Empfang einer Anforderung vom Dienstleister die Verbindung des Kunden zum Netzwerksystem (10) abzufragen, um die gegenwärtigen Werte der bedingten Datenparameter zu bestimmen, und die gegenwärtigen Werte mit den voreingestellten Werten zu vergleichen, um zu bestimmen, ob die Bedingungen für das Bereitstellen des angeforderten Dienstes erfüllt sind oder nicht; und
- das Resultat des Vergleichs zum Dienstleister (SP1, SP2, SP3) zu kommunizieren, um entweder den angeforderten Dienst zu bestätigen oder anzuzeigen, welcher von den bedingten Datenparametern die Anforderungen nicht erfüllt.

8. System nach Anspruch 7, wobei das Netzwerksystem (10) konfiguriert ist, sich mit dem Kunden (28) mittels eines zugewiesenen Ports zu verbinden, wobei die bedingten Datenparameter Parameter umfassen, die mit dem zugewiesenen Port verbunden sind, und die Servicemanageranwendung (42) konfiguriert ist, nach dem Bestimmen, dass die Bedingungen zum Bereitstellen des angeforderten Dienstes erfüllt sind, dem Steuerungs- und Bereitstellungssystem (20) zu ermöglichen, den angeforderten Dienst an den zugewiesenen Port bereitzustellen.

9. System nach Anspruch 7 oder 8, wobei die bedingten Datenparameter das Vorhandensein oder Nichtvorhandensein eines anderen Dienstes oder einer anderen Sammlung von Diensten, die Bandbreite der Verbindung, die Größe jeder nicht zugeordneten Bandbreite, die Gesamtzahl von Diensten und/oder das Vorhandensein oder Nichtvorhandensein der Teilnehmereinrichtung umfassen.

10. System nach einem der Ansprüche 7 - 9, wobei nur die Werte und Identitäten der bedingten Datenparameter, welche die Anforderungen nicht erfüllen, zum Dienstleister (SP1, SP2, SP3) kommuniziert werden.

11. System nach einem der Ansprüche 7 - 10, wobei keine Daten in Zusammenhang mit irgendwelchen anderen Dienstleistern von der Servicemanageranwendung (42) zum Dienstleister (SP1, SP2, SP3) kommuniziert werden.

12. System nach einem der vorstehenden Ansprüche 7-11, wobei die Servicemanageranwendung (42) eine Datenbank der notwendigen Bedingungen für jeden angeforderten Dienst, der bereitzustellen ist, umfasst,
wobei, wenn der angeforderte Dienst ein Dienst ist, für den es keinen Eintrag in der Datenbank gibt, die Servicemanageranwendung (42) konfiguriert ist, eine Kommunikation zum Dienstleister zu initiieren, um einen Netzbetreiber zu kontaktieren und Werte für die notwendigen Bedingungen zu ermitteln, um diesen Dienst bereitzustellen, wobei die ermittelten Werte in der Datenbank gespeichert werden, sodass sie für eine nächste Anforderung des Dienstes verwendet werden können.

## Revendications

1. Procédé de remise d'un service d'un fournisseur de services à un client (28) dans un système de réseau (10) comprenant une pluralité de fournisseurs de services (SP1, SP2, SP3) et un système de commande et de provisionnement de réseau (20) par l'intermédiaire duquel la connexion du client (28) et du fournisseur de services (SP1, SP2, SP3) est commandée, le procédé étant mis en oeuvre dans une application gestionnaire de service (42) faisant partie du système de commande et provisionnement de réseau, ledit procédé comprenant de :
- connecter le fournisseur de services (SP1, SP2, SP3) au système de commande et provisionnement (20) ;
- **caractérisé en ce que** :
- l'application de gestionnaire de service (42) contient des valeurs prédéterminées de paramètres de données conditionnelles pour des services à fournir au client (28),
- à la réception d'une demande provenant d'un fournisseur de services (SP1, SP2, SP3) pour fournir un service au client (28), interroger la connexion du client au système de réseau (10) afin de déterminer les valeurs actuelles des paramètres de données conditionnelles et comparer les valeurs actuelles avec les valeurs prédéterminées pour déterminer si ou non les conditions de fourniture du service demandé sont remplies ; et
communiquer le résultat de la comparaison au fournisseur de services (SP1, SP2, SP3) pour soit confirmer le service demandé soit indiquer lequel des paramètres de données conditionnelles ne remplit pas les conditions.

2. Procédé selon la revendication 1, dans lequel le système de réseau (10) se connecte au client (28) au moyen d'un port assigné, les paramètres de données conditionnelles comprenant des paramètres associés au port assigné et en ce que l'application de gestionnaire de service (42), lorsqu'elle détermine que les conditions de fourniture du service demandé sont remplies, permet au système de commande et provisionnement (20) de fournir le service demandé au port assigné.

3. Procédé selon la revendication 1 ou 2, dans lequel les paramètres de données conditionnelles incluent la présence ou l'absence d'un autre service ou collection de services, la bande passante de la connexion, la taille de n'importe quelle bande passante non assignée, le nombre total de services et/ou la présence ou l'absence d'un équipement d'utilisateur.

4. Procédé selon l'une quelconque des revendications précédentes, dans lequel seules les valeurs et les identités des paramètres de données conditionnelles ne remplissant pas les conditions sont communiquées au fournisseur de services (SP1, SP2, SP3).

5. Procédé selon l'une quelconque des revendications précédentes, dans lequel aucunes données relatives à n'importe quel autre fournisseur de services ne sont communiquées de l'application de gestionnaire de service (42) au fournisseur de services (SP1, SP2, SP3).

6. Procédé selon l'une quelconque des revendications précédentes, dans lequel l'application de gestionnaire de service (42) comprend une base de données des conditions nécessaires pour n'importe quel service demandé à fournir,
dans lequel si le service demandé est un service pour lequel il n'y a pas d'entrée dans la base de données, l'application de gestionnaire de service (42) amorce une communication avec un fournisseur de services pour contacter un opérateur de réseau et établir des valeurs pour les conditions nécessaires afin de fournir ce service, dans lequel les valeurs établies sont mémorisées dans la base de données afin d'être utilisées pour une demande suivante du service.

7. Système de commande et provisionnement de réseau (20) pour la remise d'un service d'un fournisseur de services à un client (28) dans un système de réseau (10) comprenant une pluralité de fournisseurs de services (SP1, SP2, SP3), le système de commande et provisionnement de réseau comprenant une application de gestionnaire de service (42) configurée pour :
- connecter le fournisseur de services au système de commande et provisionnement de réseau (20), l'application de gestionnaire de service (42) contenant des valeurs prédéterminées de paramètres de données conditionnelles pour les services à fournir au client (28),
- interroger à la réception d'une demande provenant du fournisseur de services la connexion du client au système de réseau (10) pour déterminer les valeurs actuelles des paramètres de données conditionnelles et comparer les valeurs actuelles avec une valeur prédéterminée pour déterminer si ou non les conditions de fourniture du service demandé sont remplies ; et
- communiquer le résultat de la comparaison au fournisseur de services (SP1, SP2, SP3) pour soit confirmer le service demandé soit indiquer lequel des paramètres de données conditionnelles ne remplit pas les conditions.

8. Système selon la revendication 7, dans lequel le système de réseau (10) est configuré pour se connecter au client (28) au moyen d'un port assigné, les paramètres de données conditionnelles comprenant des paramètres associés au port assigné et en ce que l'application de gestionnaire de service (42) est configurée, lorsqu'elle détermine que les conditions de fourniture du service demandé sont remplies, pour permettre au système de commande et provisionnement (20) de fournir le service demandé au port assigné.

9. Système selon la revendication 7 ou 8, dans lequel les paramètres de données conditionnelles incluent la présence ou l'absence d'un autre service ou collection de services, la bande passante de la connexion, la taille de n'importe quelle bande passante non assignée, le nombre total de services et/ou la présence ou l'absence d'un équipement d'utilisateur.

10. Système selon l'une quelconque des revendications 7 - 9, dans lequel seules les valeurs et les identités des paramètres de données conditionnelles ne remplissant pas les conditions sont communiquées au fournisseur de services (SP1, SP2, SP3).

11. Système selon l'une quelconque des revendications 7 - 10, dans lequel aucunes données relatives à n'importe quel autre fournisseur de services ne sont communiquées de l'application de gestionnaire de service (42) au fournisseur de services (SP1, SP2, SP3).

12. Système selon l'une quelconque des revendications 7-11, dans lequel l'application de gestionnaire de service (42) comprend une base de données des conditions nécessaires pour n'importe quel service demandé à fournir,
dans lequel si le service demandé est un service pour lequel il n'y a pas d'entrée dans la base de données, l'application de gestionnaire de service (42) est configurée pour amorcer une communication avec un fournisseur de services pour contacter un opérateur de réseau et établir des valeurs pour les conditions nécessaires afin de fournir ce service, dans lequel les valeurs établies sont mémorisées dans la base de données afin d'être utilisées pour une demande suivante du service.
